# FASCICULE DE BREVET EUROPEEN

(11) **EP 3 394 556 B1**
(45) Date de publication et mention de la délivrance du brevet: **13.01.2021**
(21) Numéro de dépôt: 16822942.5
(22) Date de dépôt: 16.12.2016
(51) Int. Cl.: B01D 46/00, F02M 26/30, F02M 26/35, F28D 21/00, F28F 19/01, B01D 46/10, B01D 46/42, F02M 35/02, F28D 7/16, F28F 9/00, F28F 9/02

(54) **ÉCHANGEUR THERMIQUE POUR GAZ, EN PARTICULIER POUR LES GAZ D'ÉCHAPPEMENT D'UN MOTEUR, ET ENSEMBLE UNITÉ DE CONDUITE DE GAZ AVEC FILTRE À PARTICULES**
GAS-WÄRMETAUSCHER, INSBESONDERE FÜR MOTORABGAS, UND GASLEITUNGSEINHEIT MIT PARTIKELFILTER
PARTICULAR HEAT EXCHANGER FOR GAS, IN PARTICULAR FOR EXHAUST GAS OF AN ENGINE, AND GAS CONDUIT UNIT WITH PARTICLE FILTER

(30) Priorité: 21.12.2015 ES 201531860
(43) Date de publication de la demande: 31.10.2018
(73) Titulaire: Valeo Termico S.A., 50011 Zaragoza (ES)
(72) Inventeur: JIMENEZ, Jésus, 50011 Zaragoza (ES); DE LA FUENTE, José Antonio, 50011 Zaragoza (ES); IGUAZ PIEDRAFITA, Javier, 50011 Zaragossa (ES); ESCOS, José, 50011 Zaragossa (FR)
(74) Mandataire: Tran, Chi-Hai
(86) Numéro de dépôt international: PCT/EP2016/081453
(87) Numéro de publication internationale: WO 2017/108614

(56) Documents cités:
- EP-A1- 0 478 895
- EP-A1- 2 273 095
- EP-A1- 2 817 503
- EP-A2- 1 172 240
- DE-A1- 4 344 269
- FR-A1- 2 444 580
- FR-A1- 2 759 325
- FR-A3- 2 925 608

## Description

### Domaine technique

La présente invention concerne en général, dans un premier aspect, un échangeur thermique pour gaz, en particulier pour les gaz d'échappement d'un moteur, qui comprend un filtre à particules, et plus particulièrement un échangeur dont le filtre à particules est interchangeable.

Un second aspect de la présente invention concerne un ensemble unité de conduite de gaz avec filtre à particules, en particulier pour des gaz d'échappement d'un moteur, et plus particulièrement un échangeur dans lequel le filtre à particules est interchangeable.

L'invention s'applique en particulier dans des échangeurs de recirculation de gaz d'échappement d'un moteur ("*Exhaust Gas Recirculation Coolers*" ou EGRC).

### Art antérieur

La fonction principale des échangeurs EGR est l'échange de chaleur entre les gaz d'échappement et le fluide caloporteur, dans le but de refroidir les gaz.

Actuellement, les échangeurs thermiques EGR sont largement utilisés pour des applications Diesel afin de réduire les émissions et servent aussi dans des applications à essence pour réduire la consommation de carburant.

Le marché tend à réduire la taille des moteurs et à appliquer les échangeurs thermiques EGR non seulement dans les applications à haute pression (HP) mais aussi dans celles à basse pression (LP) ; toutes les deux ont un impact sur la conception des échangeurs de chaleur EGR. Les constructeurs de véhicules exigent des échangeurs thermiques EGR avec de meilleurs rendements et, en même temps, l'espace disponible pour placer l'échangeur et ses composants est de plus en plus petit, ce qui les rend de plus en plus difficiles à intégrer.

En plus, dans de nombreuses applications le flux de fluide caloporteur disponible pour refroidir les gaz d'échappement tend à se réduire, bien que les rendements de l'échangeur aient progressivement augmenté.

La configuration actuelle des échangeurs EGR présents sur le marché correspond à un échangeur thermique métallique généralement fabriqué en acier inoxydable ou en aluminium.

Fondamentalement, il y a deux types d'échangeurs thermiques EGR : un premier type consiste en un boîtier à l'intérieur duquel on dispose un faisceau de tubes parallèles pour le passage des gaz, le réfrigérant circulant dans le boîtier, à l'extérieur des tubes, et le second type se compose d'une série de plaques parallèles qui constituent les surfaces d'échange de chaleur, de sorte que les gaz d'échappement et le réfrigérant circulent entre deux plaques, en couches alternées, avec possibilité d'inclure des ailettes pour améliorer l'échange de chaleur.

Dans le cas d'échangeurs thermiques à faisceau de tubes, l'assemblage entre les tubes et le boîtier peut être de différents types. Généralement, les tubes sont fixés par leurs extrémités entre deux plaques de support raccordées à chaque extrémité du boîtier, les deux plaques de support présentant une pluralité d'orifices pour l'installation des tubes respectifs.

Lesdites plaques de support sont fixées à leur tour à des moyens de raccordement avec le circuit de recirculation, qui peuvent consister en un montage en V ou bien en un collet périphérique de raccordement ou une bride, en fonction de la conception du circuit de recirculation dans lequel est assemblé l'échangeur. Le collet périphérique peut être assemblé avec un réservoir à gaz, de façon à ce que le réservoir à gaz soit une pièce intermédiaire entre le boîtier et le collet, ou bien le collet peut être assemblé directement au boîtier.

Dans certains échangeurs EGR, principalement dans les applications à basse pression (LP), les conditions de propreté sont exigeantes ; par conséquent, l'emploi d'un filtre à particules (pas un filtre à suie) intégré dans la ligne d'échappement est de plus en plus demandé. Ledit filtre est généralement constitué par un composant indépendant ou, dans certains cas, par un composant intégré avec l'échangeur EGR.

Les documents de brevet ci-après proposent des échangeurs thermiques avec des filtres à particules fixés ou intégrés dans différentes parties de l'échangeur thermique selon la préambule de la revendication 1.

Le brevet EP2273095B1 concerne un échangeur thermique comprenant un filtre de fluide intégré audit échangeur, qui comprend une zone de filtre dépassant d'une surface plane. Ce filtre est configuré comme un joint et est monté entre la bride de raccordement et le réservoir de gaz au moyen d'éléments de visserie.

Le brevet EP2194351B1 concerne un échangeur thermique comprenant un filtre à particules pour la filtration des gaz d'échappement, structurellement intégré à l'intérieur du tube d'entrée de gaz de l'échangeur thermique.

Le brevet FR2938051B1 concerne un échangeur thermique qui comprend un filtre logé dans une position choisie de façon à ce que le filtre soit disposé près d'un côté extrême du faisceau de tubes.

Le brevet ES2421185B1, dont le titulaire est celui de la présente demande, décrit un échangeur thermique qui comprend un réservoir de gaz pourvu d'un orifice d'entrée pouvant être accouplé à une extrémité du boîtier et d'un orifice de sortie raccordé avec la ligne de recirculation de gaz et un filtre à particules assemblé à l'orifice d'entrée du réservoir de gaz, de préférence par soudage à l'arc ou par points et, en plus, de manière optionnelle, par brasage.

La demande espagnole publiée sous le numéro 2 531 124 et ayant le même titulaire que la présente demande propose un échangeur thermique avec un filtre à particules pour le filtrage des gaz d'échappement associé à l'orifice de sortie du réservoir de gaz et un joint d'étanchéité disposé sur une surface extérieure du collet ou de la bride de raccordement, dans lequel le filtre est assemblé par brasage entre le réservoir de gaz et le collet ou la bride de raccordement, ledit filtre étant ainsi intégré au réservoir de gaz formant une seule pièce indémontable susceptible d'être accouplée au boîtier de l'échangeur.

Dans toutes les conceptions existantes et connues, dans le cas où l'on aurait besoin de remplacer le filtre, en raison d'une obstruction complète de celui-ci, il faudrait remplacer tout l'échangeur EGR.

Il apparaît par conséquent nécessaire d'offrir une alternative à l'état de la technique qui comble les lacunes qu'on y trouve, en apportant une solution qui évite le remplacement complet susdit de l'échangeur EGR quand le filtre se colmate.

Le document DE4344269 montre un filtre fixé amovible dans un conduit d'air alimentation d'une véhicule, mais n'indique pas de position favorable dans un échangeur de chaleur.

### Description de l'invention

À cette fin, la présente invention concerne, d'un premier point de vue, un échangeur thermique pour gaz, en particulier pour des gaz d'échappement d'un moteur, qui comprend, d'une manière connue en soi :
- un bloc échangeur thermique destiné à la circulation des gaz avec échange de chaleur avec un fluide caloporteur ;
- une unité de conduite de gaz fixée à une extrémité dudit bloc échangeur thermique, de manière à ce qu'elle reste en communication fluidique avec celui-ci pour que les gaz le traversent ; et
- un filtre à particules disposé entre l'entrée et la sortie de gaz de l'échangeur, de manière à ce que les gaz le traversent.

À la différence des échangeurs thermiques connus dans l'état de l'art, dans celui proposé par le premier aspect de la présente invention, de manière caractéristique, le filtre à particules est interchangeable, monté amovible dans l'unité de conduite de gaz.

Selon un mode de réalisation, le bloc échangeur thermique comprend un boîtier qui abrite en son intérieur un faisceau de tubes destinés à la circulation des gaz avec échange de chaleur avec ledit fluide caloporteur, lequel circule dans l'intérieur du boîtier à l'extérieur des tubes.

Selon une variante de mode de réalisation, le bloc échangeur thermique comprend un boîtier qui abrite en son intérieur une pluralité de plaques empilées entre lesquelles circulent les gaz et le fluide caloporteur suivant deux circuits indépendants, en couches alternées, délimités par lesdites plaques.

L'unité de conduite de gaz comprend, conformément à l'invention, au minimum une bride de raccordement pouvant être raccordée à une ligne de recirculation de gaz et, en général, également un réservoir de gaz ayant une première partie, qui comprend une première ouverture, raccordée à une extrémité dudit bloc échangeur thermique ou dudit boîtier et une seconde partie, qui comprend une seconde ouverture, raccordée à la bride de raccordement.

Conformément à l'invention, le filtre à particules est monté amovible sur ladite bride de raccordement et disposé de manière à filtrer les gaz qui le traversent et passent à travers une ouverture traversante de la bride de raccordement.

En général, il est également possible, dans un autre mode de réalisation, que l'on dispose deux filtres amovibles, l'un sur la bride de raccordement et l'autre sur le réservoir de gaz.

Avantageusement, l'échangeur thermique selon le premier aspect de la présente invention comprend au minimum un joint d'étanchéité pour le montage étanche vis-à-vis des gaz du filtre à particules dans l'unité de conduite de gaz ou dans le réservoir de gaz.

Le filtre à particules comprend un élément de filtration et, assemblé à celui-ci, un élément structurel fixé amovible sur un support de filtre défini dans ou fixé sur la bride de raccordement ou le réservoir de gaz.

Conformément à un mode de réalisation préféré, ledit élément structurel est un cadre périphérique (par exemple métallique) assemblé au contour de l'élément de filtration et le support de filtre susdit comprend au minimum une rainure non traversante dans laquelle s'encastre de manière guidée au moins une partie dudit cadre périphérique.

On envisage d'autres modes de réalisations dans lesquels l'élément structurel n'est pas un cadre périphérique mais un autre type d'élément structurel et/ou dans lesquels le support de filtre ne comprend pas une rainure mais un autre type de configuration structurelle complémentaire d'au moins une partie de l'élément structurel.

Dans un mode de réalisation, ledit joint d'étanchéité est un joint périphérique accouplé au contour du cadre périphérique et dont au moins une partie est coincée sous pression entre le cadre périphérique et ladite rainure non traversante, c'est-à-dire contre les parois qui délimitent la rainure, empêchant ainsi la sortie de gaz.

L'accouplement du joint périphérique au contour du cadre périphérique peut s'effectuer au moyen de tout procédé connu, tel que la mise en place d'une feuillure périphérique dans le bord du cadre et l'introduction et l'encastrement dans celle-ci d'une partie du joint.

Selon un mode de réalisation, l'élément structurel et le support de filtre, ou la bride de raccordement ou le réservoir de gaz comprennent des moyens d'accouplement complémentaires respectifs aptes à s'accoupler libérables pour un montage amovible au filtre à particules par rapport au support de filtre, ou à la bride de raccordement ou au réservoir de gaz.

Pour une mise en œuvre dudit mode de réalisation, les moyens d'accouplement complémentaires susdits comprennent au moins une feuillure et un appendice configurés et disposés pour qu'une partie de l'appendice s'encastre, par déformation élastique, dans la feuillure, la feuillure étant délimitée dans le support de filtre, ou dans la bride de raccordement ou dans le réservoir de gaz, et l'appendice dans une zone de l'élément structurel, ou vice-versa.

Conformément à une variante de ladite mise en œuvre, l'appendice susdit s'étend et dépasse de l'un des quatre côtés du cadre périphérique.

En plus de la mise en œuvre exposée ci-dessus, d'autres mises en œuvre des moyens d'accouplement complémentaires susmentionnés sont également possibles, y compris des configurations d'accouplement qui s'encastrent l'une dans l'autre automatiquement quand on introduit le cadre périphérique du filtre dans la rainure non traversante, soit par déformation élastique ou par d'autres moyens automatiques, soit par des configurations d'accouplement qui nécessitent l'intervention d'un utilisateur pour effectuer l'opération d'accouplement (vissage, etc.).

En ce qui concerne le mode de réalisation dans lequel le filtre à particules est monté amovible dans le bloc échangeur thermique, il existe diverses variantes ou mise en œuvre de celui-ci, telle que celle associée au montage du filtre dans un support de filtre défini dans ou fixé sur une des plaques de support accouplées à chaque extrémité du boîtier de l'échangeur, ou directement sur le boîtier de l'échangeur de manière à ce qu'il ne bloque pas le passage du fluide caloporteur à l'intérieur du boîtier.

Le filtre à particules est configuré pour bloquer le passage de particules de taille supérieure à celle des particules de suie.

Comme il est interchangeable, le filtre peut être remplacé par un autre après un nombre déterminé de kilomètres parcourus par le véhicule dans lequel il est installé.

La présente invention concerne aussi, selon un second aspect, un ensemble unité de conduite de gaz avec filtre à particules, pour échangeur thermique pour gaz, en particulier pour des gaz d'échappement d'un moteur, dans lequel l'unité de conduite de gaz est apte à se fixer à une extrémité d'un bloc échangeur thermique de manière à ce qu'elle reste en communication fluidique avec celui-ci pour que les gaz le traversent et le filtre à particules est accouplé à l'unité de conduite de gaz pour filtrer les gaz d'échappement qui le traversent.

À la différence des ensembles connus, dans celui proposé par le second aspect de la présente invention, le filtre à particules est interchangeable, car il est monté amovible dans l'unité de conduite de gaz.

Dans un mode de réalisation, l'unité de conduite de gaz comprend au minimum une bride de raccordement pouvant être raccordée à une ligne de recirculation de gaz, où le filtre à particules est monté amovible sur ladite bride de raccordement et disposé de manière à filtrer les gaz qui le traversent et passent à travers une ouverture traversante de la bride de raccordement.

Dans un autre mode de réalisation, l'unité de conduite de gaz comprend un réservoir de gaz, un deuxième filtre à particules étant monté amovible dans le réservoir de gaz.

Que tous les modes de réalisation décrits précédemment pour le premier aspect de l'invention soient, quand ils concernent l'intégration du filtre à particules dans l'unité de conduite de gaz, considérés comme valables pour le second aspect de l'invention.

### Brève description des dessins

On comprendra de façon plus complète les avantages ci-dessus et d'autres et les caractéristiques à partir de la description détaillée ci-après de quelques modes de réalisation qui se réfèrent aux dessins ci-joints, qui doivent être pris à titre illustratif et non limitatif, parmi lesquels :
la Figure 1 est une vue en perspective de face qui montre le filtre à particules dans un état préalable à son montage sur une bride de raccordement d'une unité de raccordement, dans un mode de réalisation valable tant pour l'échangeur selon le premier aspect que pour l'ensemble selon le second aspect ;
la Figure 2 est une vue en perspective de dos qui montre les mêmes éléments que la Figure 1, mais dans un état dans lequel on a partiellement monté le filtre sur la bride de raccordement ;
la Figure 3 est une vue en perspective de face analogue à celle de la Figure 1, dans le même mode de réalisation, mais dans un état dans lequel on a déjà monté complètement le filtre à particules sur la bride de raccordement ;
la Figure 4 illustre, au moyen d'une vue en perspective de face qui montre le filtre à particules dans un état préalable à son montage sur un réservoir de gaz d'une unité de raccordement, dans un autre mode de réalisation valable tant pour l'échangeur selon le premier aspect que pour l'ensemble selon le second aspect ;
la Figure 5 illustre, au moyen d'une vue en perspective de face, le même mode de réalisation que sur la Figure 4, mais dans un état dans lequel on a déjà monté complètement le filtre à particules sur le réservoir de gaz ; et
la Figure 6 illustre, au moyen d'une vue en perspective de dos, le même mode de réalisation que sur la Figure 5, également avec le filtre déjà monté sur le réservoir de gaz.

### Description détaillée de quelques modes de réalisation

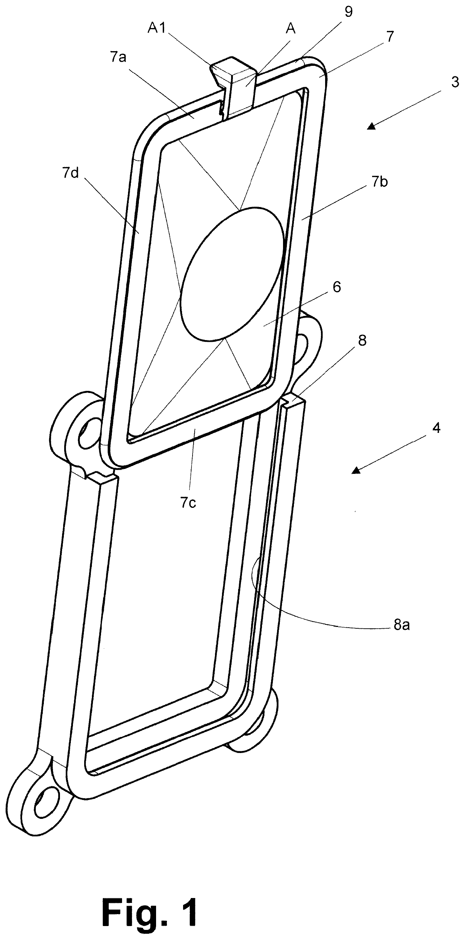

Sur les Figures 1, 2 et 3 on a représenté, dans différentes conditions de montage, un mode de réalisation de l'échangeur et de l'ensemble proposés par la présente invention, dans lequel le filtre à particules 3 se monte amovible sur une bride de raccordement 4 d'une unité de conduite de gaz pouvant être fixée à une extrémité d'un bloc échangeur thermique (non représenté) de l'échangeur, de manière à ce qu'elle reste en communication fluidique avec celui-ci pour que les gaz le traversent.

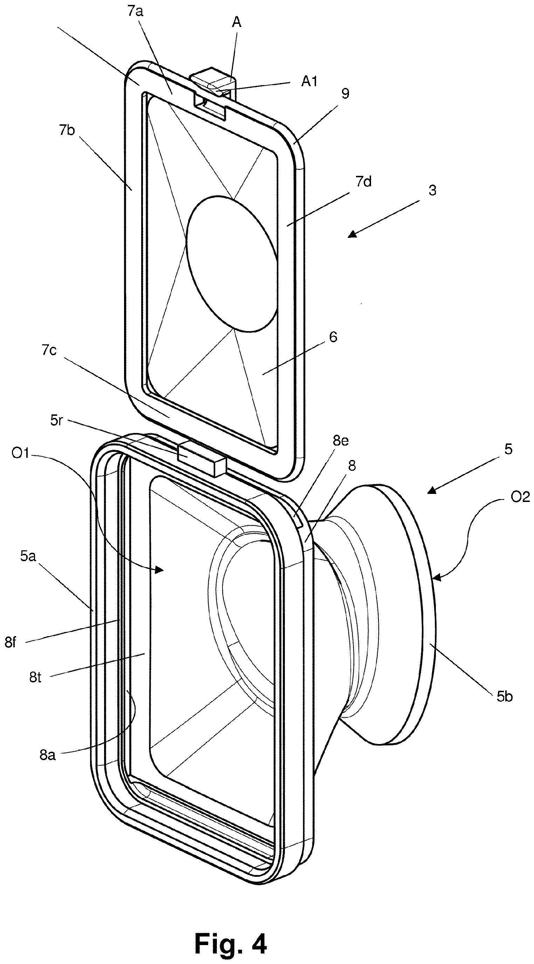

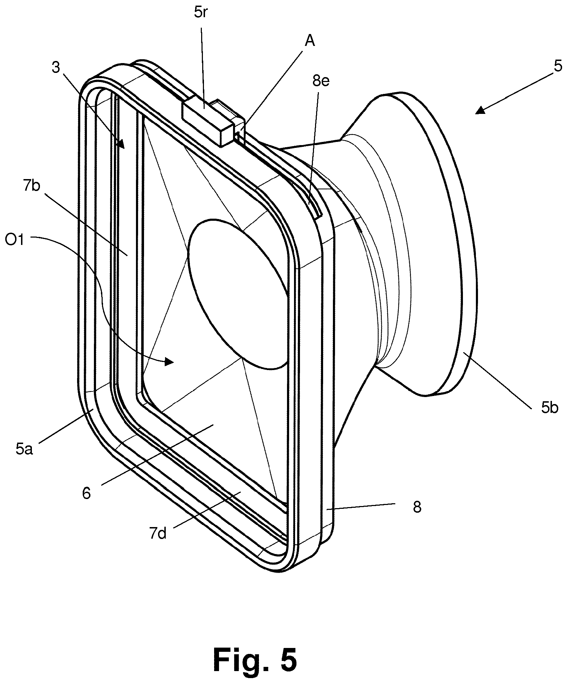

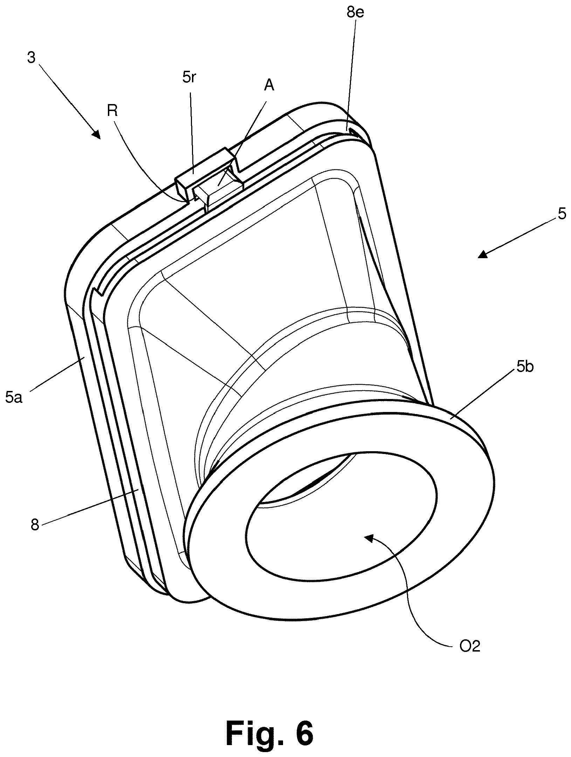

Une variante de mode de réalisation est illustrée sur les Figures 4 à 6, où un deuxième filtre à particules 3 est monté amovible sur un réservoir de gaz 5 de l'unité de conduite, en particulier sur une seconde partie 5b de celui-ci, qui comprend une seconde ouverture O2, à raccorder à une bride de raccordement, le réservoir de gaz 5 étant aussi pourvu d'une première partie 5a, qui comprend une première ouverture O1, pouvant être raccordée à une extrémité du bloc échangeur thermique (non représenté) ou du boîtier (non représenté) de l'échangeur.

Dans les deux modes de réalisation, le filtre à particules 3 comprend un élément de filtration 6 et, assemblé à celui-ci, un élément structurel 7 fixé amovible sur un support 8 de filtre défini dans la bride de raccordement 4 ou le réservoir de gaz 5.

En particulier, l'élément structurel 7 susmentionné est, dans les exemples illustrés, un cadre périphérique 7 assemblé au contour de l'élément de filtration 6 et qui comprend un appendice A qui s'étend et dépasse de l'un 7a de ses quatre côtés 7a, 7b, 7c, 7d et dont la fonction sera décrite par la suite.

Le cadre périphérique est configuré pour se fixer amovible sur un support 8 de filtre défini dans ou fixé sur la bride de raccordement 4 ou sur le réservoir de gaz 5, en fonction du mode de réalisation.

Comme on le discerne sur les figures ci-jointes, on dispose un joint d'étanchéité 9 périphérique continu accouplé au contour du cadre périphérique 7 dont le but est d'empêcher la sortie de gaz une fois monté le filtre 3.

Dans le mode de réalisation illustré sur les Figures 1 à 3, le support 8 de filtre est une structure formée par des parois contiguës à section transversale en forme de L qui se détachent respectivement à partir de trois bords périphériques d'une face de la bride de raccordement 4.

Les trois parois contiguës sont assemblées, sans solution de continuité, en décrivant une forme de U, une rainure 8a non traversante étant délimitée entre les pans respectifs des parois dont les sections transversales constituent les bases respectives des L des sections transversales en forme de L et des zones opposées de ladite face de la bride de raccordement 4.

Pour introduire/extraire le filtre à particules 3 par rapport à la bride de raccordement 4, le bord des côtés 7b, 7d du cadre périphérique 7, avec les segments latéraux du joint périphérique 9 accouplé à celui-ci, est coulissé en étant guidé par les pans verticaux (suivant la position représentée) de la rainure 8a non traversante, lesdits côtés y entrant/en sortant par leur accès supérieur (suivant la position représentée sur les figures) ouvert jusqu'à ce que le bord du côté 7c, avec le segment inférieur du joint périphérique 9 accouplé à celui-ci, s'introduise dans le pan inférieur de la rainure 8a jusqu'à être en butée contre le fond de celle-ci.

De cette manière, les segments latéraux et inférieur du joint périphérique 9 sont coincés sous pression entre le cadre périphérique 7 et la rainure 8a non traversante, empêchant la sortie de gaz à l'extérieur.

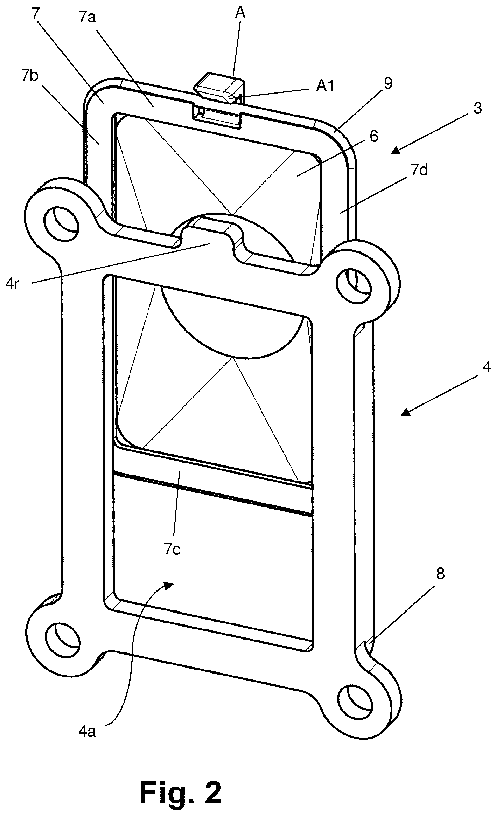

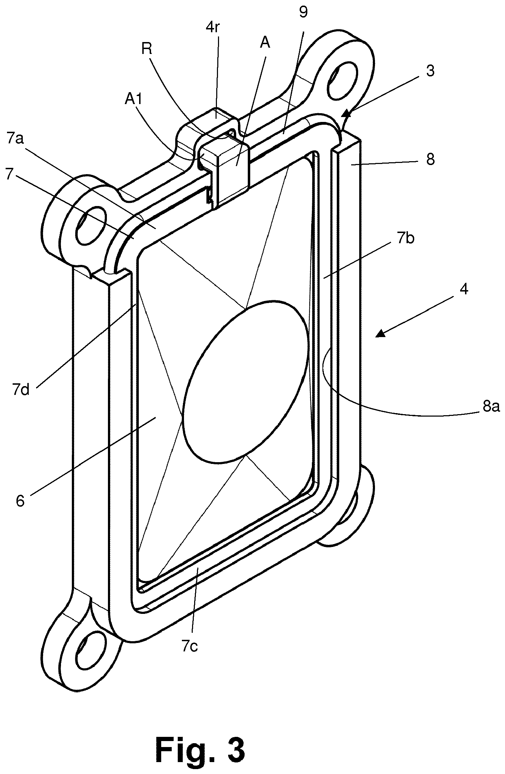

La Figure 1 illustre la position préalable à l'introduction du cadre périphérique 7 dans la rainure 8a (ou la situation postérieure à l'extraction de celui-ci), la Figure 2 une position de montage intermédiaire et la Figure 3 un état dans lequel le cadre périphérique 7 a déjà été complètement introduit dans la rainure 8a.

Afin que le filtre à particules 3 reste accouplé au support 8 de filtre, on dispose respectivement des moyens d'accouplement complémentaires aptes à s'accoupler libérables pour monter le filtre à particules 3 amovible par rapport au support 8 de filtre, lesquels comprennent une feuillure R délimitée dans une saillie 4r du côté supérieur (suivant la position représentée) de la bride de raccordement 4 et l'appendice A mentionné antérieurement, lequel comprend une partie terminale A1 configurée et disposée pour s'encastrer, par déformation élastique, dans la feuillure R quand le cadre périphérique 7 se trouve complètement introduit dans la rainure 8a non traversante.

Dans l'exemple illustré, la partie A1 définit sur sa surface inférieure (suivant la position représentée) une rampe qui, pendant le coulissement du cadre 7 dans la rainure 8a non traversante, entre en contact avec un bord supérieur de la saillie 4r en coulissant contre celui-ci de manière à ce que l'appendice A soit poussé par celui-ci, par déformation élastique, dans une direction opposée à la position de la feuillure R jusqu'à ce que la pointe de la partie A1 se trouve en face de la feuillure R et entre dans celle-ci lorsque l'appendice A se remet de manière élastique de la déformation susdite. Dans cette position, le segment supérieur du joint périphérique 9 est pressé fermement contre la bride de raccordement 4, de telle sorte que tout le joint 9 empêche la sortie de gaz vers l'extérieur.

Dans le mode de réalisation illustré sur les Figures 4 à 6, le support 8 de filtre est constitué par une structure intermédiaire du réservoir de gaz 5 disposée derrière la première partie 5a de celui-ci, et comprenant une partie arrière 8t en forme de cadre qui entoure la première ouverture O1 et une partie avant 8f qui prend la forme d'un rebord périphérique, la rainure 8a non traversante étant délimitée par l'espace existant entre lesdites parties 8t, 8f. En outre, on trouve, délimitée dans la paroi supérieure (suivant la position représentée) de la structure intermédiaire 8, une rainure 8e traversante pour le passage du filtre à particules 3, de manière à ce que celui-ci puisse être introduit/extrait par rapport au réservoir de gaz 5.

L'opération d'introduction/extraction du filtre à particules 3 par rapport au réservoir de gaz 5 est analogue à celle décrite pour le mode de réalisation des Figures 1 à 3, avec cette différence qu'on doit introduire le cadre périphérique 7 dans la rainure 8a non traversante à travers la rainure 8e traversante, le bord des côtés 7b, 7d du cadre périphérique 7, avec les segments latéraux du joint périphérique 9 accouplé à celui-ci, coulissant en étant guidé par les pans verticaux (suivant la position représentée) de la rainure 8a non traversante, jusqu'à ce que le bord du côté 7c, avec le segment inférieur du joint périphérique 9 accouplé à celui-ci, s'introduise dans le pan inférieur de la rainure 8a jusqu'à être en butée contre le fond de celle-ci.

De la même façon que dans l'exemple des Figures 1 à 3, dans le mode de réalisation illustré par les Figures 4 à 6 également on dispose de moyens d'accouplement complémentaires respectifs aptes à s'accoupler libérables pour monter le filtre à particules 3 amovible par rapport au support 8 de filtre, lesquels comprennent une feuillure R délimitée dans une saillie 5r du côté supérieur (suivant la position représentée) du réservoir de gaz 5 et l'appendice A mentionné antérieurement. Le fonctionnement de ces moyens d'accouplement complémentaires est le même que celui déjà décrit précédemment en relation avec les Figures 1 à 3.

L'homme du métier pourrait introduire des changements et des modifications dans les modes de réalisation décrits sans sortir de la portée de l'invention telle qu'elle est définie dans les revendications jointes.

## Revendications

1. Ensemble unité de conduite de gaz avec filtre à particules (3), pour échangeur thermique pour gaz, tout spécialement pour des gaz d'échappement d'un moteur, l'unité de conduite de gaz étant apte à se fixer à une extrémité d'un bloc échangeur thermique de manière à ce qu'elle reste en communication fluidique avec celui-ci pour que les gaz le traversent et le filtre à particules (3) étant accouplé à l'unité de conduite de gaz pour filtrer les gaz d'échappement qui le traversent, **caractérisé en ce que** ledit filtre à particules (3) est interchangeable, ledit filtre étant monté amovible dans ladite unité de conduite de gaz, ladite unité de conduite de gaz comprenant au moins une bride de raccordement (4) avec une ligne de recirculation de gaz, et ledit filtre à particules (3) étant monté amovible sur ladite bride de raccordement (4) et disposé de manière à filtrer les gaz qui le traversent et passent à travers une ouverture traversante (4a) de la bride de raccordement (4).

2. Ensemble selon la revendication précédente, dans lequel ladite unité de conduite de gaz comprend un réservoir de gaz (5), un deuxième filtre à particules (3) étant monté amovible sur ledit réservoir de gaz (5).

3. Échangeur thermique pour gaz, en particulier pour des gaz d'échappement d'un moteur, qui comprend :
- un bloc échangeur thermique destiné à la circulation des gaz avec échange de chaleur avec un fluide caloporteur ;
- une unité de conduite de gaz fixée à une extrémité dudit bloc échangeur thermique, de manière à ce qu'elle reste en communication fluidique avec celui-ci pour que les gaz le traversent ; et
- un filtre à particules (3) disposé entre l'entrée et la sortie de gaz de l'échangeur, de manière à ce que les gaz le traversent, **caractérisé en ce que** l'unité de conduite de gaz et le filtre à particules sont un ensemble selon la revendication 1 ou 2.

4. Échangeur selon la revendication 3, dans lequel ledit bloc échangeur thermique comprend un boîtier qui abrite en son intérieur un faisceau de tubes destinés à la circulation des gaz avec échange de chaleur avec ledit fluide caloporteur, lequel circule dans l'intérieur du boîtier à l'extérieur des tubes.

5. Échangeur selon la revendication 3, dans lequel ledit bloc échangeur thermique comprend un boîtier qui abrite en son intérieur une pluralité de plaques empilées entre lesquelles circulent les gaz et le fluide caloporteur suivant deux circuits indépendants, en couches alternées, délimités par lesdites plaques.

6. Échangeur selon l'une quelconque des revendications 3 à 5, dans lequel ladite unité de conduite de gaz comprend en outre un réservoir de gaz (5) ayant une première partie (5a), qui comprend une première ouverture (O1), raccordée à une extrémité dudit bloc échangeur thermique ou dudit boîtier et une seconde partie (5b), qui comprend une seconde ouverture (O2), raccordée à ladite bride de raccordement (4).

7. Échangeur selon l'une quelconque des revendications 3 à 6, comprenant au moins un joint d'étanchéité pour le montage étanche vis-à-vis des gaz dudit filtre à particules (3) dans l'unité de conduite de gaz ou dans le réservoir de gaz.

8. Échangeur selon la revendication précédente quand elle est subordonnée à la revendication 6, dans lequel ledit filtre à particules (3) comprend un élément de filtration (6) et, assemblé à celui-ci, un élément structurel (7) fixé amovible sur un support (8) de filtre défini dans ou fixé sur ladite bride de raccordement (4).

9. Échangeur selon la revendication précédente, dans lequel ledit élément structurel (7) est un cadre périphérique assemblé au contour de l'élément de filtration (6) et ledit support (8) de filtre comprend au moins une rainure (8a) non traversante dans laquelle s'encastre avec guidage au moins une partie dudit cadre périphérique (7).

10. Échangeur selon la revendication précédente, dans lequel ledit joint d'étanchéité est un joint périphérique (9) accouplé au contour dudit cadre périphérique (7) et dont au moins une partie est coincée sous pression entre le cadre périphérique (7) et ladite au moins une rainure (8a) non traversante, empêchant la sortie de gaz.

11. Échangeur selon l'une quelconque des revendications 8 à 10, dans lequel ledit élément structurel (7) et ledit support (8) de filtre, ou ladite bride de raccordement (4) ou ledit réservoir de gaz (5) comprennent respectivement des moyens d'accouplement complémentaires aptes à s'accoupler libérables pour un montage amovible au filtre à particules (3) par rapport au support (8) de filtre, ou à la bride de raccordement ou au réservoir de gaz.

12. Échangeur selon la revendication précédente, dans lequel lesdits moyens d'accouplement complémentaires comprennent au moins une feuillure (R) et au moins un appendice (A) configurés et disposés pour qu'une partie (A1) de l'appendice (A) s'encastre, par déformation élastique, dans ladite feuillure (R), la feuillure (R) étant délimitée dans le support (8) de filtre, ou dans la bride de raccordement (4) ou dans le réservoir de gaz (5), et l'appendice (A) dans une zone de l'élément structurel (7), ou vice-versa.

13. Échangeur selon la revendication précédente quand elle est subordonnée à la revendication 9 ou 10, dans lequel ledit appendice (A) s'étend et dépasse de l'un (7a) des quatre côtés (7a, 7b, 7c, 7d) dudit cadre périphérique (7).

14. Échangeur selon l'une quelconque des revendications 3 à 13, dans lequel le filtre à particules (3) est configuré pour bloquer le passage de particules de taille supérieure à celle des particules de suie.

## Patentansprüche

1. Gasleitungseinheit-Anordnung mit Partikelfilter (3) für einen Wärmetauscher für Gase, insbesondere für Abgase eines Motors, wobei die Gasleitungseinheit geeignet ist, an einem Ende eines Wärmetauscherblocks so fixiert zu werden, dass sie in Fluidverbindung mit diesem bleibt, damit die Gase ihn durchströmen, und der Partikelfilter (3) an die Gasleitungseinheit gekoppelt ist, um die ihn durchströmenden Abgase zu filtern, **dadurch gekennzeichnet, dass** der Partikelfilter (3) austauschbar ist, wobei der Filter in der Gasleitungseinheit herausnehmbar angebracht ist, wobei die Gasleitungseinheit mindestens einen Anschlussflansch (4) mit einer Gasrückführleitung umfasst und wobei der Partikelfilter (3) an dem Anschlussflansch (4) herausnehmbar angebracht ist und so angeordnet ist, dass er die Gase filtert, die ihn durchströmen und durch eine Durchgangsöffnung (4a) des Anschlussflansches (4) durchtreten.

2. Anordnung nach dem vorhergehenden Anspruch, wobei die Gasleitungseinheit einen Gasbehälter (5) umfasst, wobei ein zweiter Partikelfilter (3) an dem Gasbehälter (5) herausnehmbar angebracht ist.

3. Wärmetauscher für Gase, insbesondere für Abgase eines Motors, der umfasst:
- einen Wärmetauscherblock, der zur Zirkulation der Gase mit Wärmeaustausch mit einem Wärmeträgerfluid bestimmt ist;
- eine Gasleitungseinheit, die an einem Ende des Wärmetauscherblocks so fixiert ist, dass sie in Fluidverbindung mit diesem bleibt, damit die Gase ihn durchströmen; und
- einen Partikelfilter (3), der zwischen dem Gaseinlass und -auslass des Tauschers so angeordnet ist, dass die Gase ihn durchströmen,
**dadurch gekennzeichnet, dass** die Gasleitungseinheit und der Partikelfilter eine Anordnung nach Anspruch 1 oder 2 sind.

4. Tauscher nach Anspruch 3, wobei der Wärmetauscherblock ein Gehäuse umfasst, das in seinem Innern ein Bündel Rohre aufnimmt, die zur Zirkulation der Gase mit Wärmeaustausch mit dem Wärmeträgerfluid bestimmt sind, das im Innern des Gehäuses außerhalb der Rohre zirkuliert.

5. Tauscher nach Anspruch 3, wobei der Wärmetauscherblock ein Gehäuse umfasst, das in seinem Innern eine Mehrzahl von gestapelten Platten aufnimmt, zwischen denen die Gase und das Wärmeträgerfluid entlang von zwei unabhängigen Kreisen in abwechselnden, durch die Platten begrenzten Schichten zirkulieren.

6. Tauscher nach einem der Ansprüche 3 bis 5, wobei die Gasleitungseinheit ferner einen Gasbehälter (5) umfasst, der einen ersten Teil (5a) aufweist, der eine erste Öffnung (O1) umfasst, der an ein Ende des Wärmetauscherblocks oder des Gehäuses angeschlossen ist, und einen zweiten Teil (5b), der eine zweite Öffnung (O2) umfasst, die an den Anschlussflansch (4) angeschlossen ist.

7. Tauscher nach einem der Ansprüche 3 bis 6, der mindestens eine Dichtung zur gasdichten Anbringung des Partikelfilters (3) in der Gasleitungseinheit oder in dem Gasbehälter umfasst.

8. Tauscher nach dem vorhergehenden Anspruch, wenn rückbezogen auf Anspruch 6, wobei der Partikelfilter (3) ein Filterelement (6) umfasst und, an diesem montiert, ein strukturelles Element (7), das herausnehmbar an einem Filterträger (8) fixiert ist, der in dem Anschlussflansch (4) ausgebildet oder daran fixiert ist.

9. Tauscher nach dem vorhergehenden Anspruch, wobei das strukturelle Element (7) ein Umfangsrahmen ist, der an die Kontur des Filterelements (6) montiert ist, und der Filterträger (8) mindestens eine nicht durchgehende Nut (8a) umfasst, in die mindestens ein Teil des Umfangsrahmens (7) mit Führung eingesetzt wird.

10. Tauscher nach dem vorhergehenden Anspruch, wobei die Dichtung eine Umfangsdichtung (9) ist, die mit der Kontur des Umfangsrahmens (7) gekoppelt ist und von der mindestens ein Teil unter Druck zwischen den Umfangsrahmen (7) und die mindestens eine nicht durchgehende Nut (8a) geklemmt ist, was das Austreten von Gas verhindert.

11. Tauscher nach einem der Ansprüche 8 bis 10, wobei das strukturelle Element (7) und der Filterträger (8) oder der Anschlussflansch (4) oder der Gasbehälter (5) jeweils komplementär ausgebildete Kopplungsmittel umfassen, die geeignet sind, zur herausnehmbaren Anbringung am Partikelfilter (3) in Bezug auf den Filterträger (8) oder den Anschlussflansch oder den Gasbehälter lösbar gekoppelt zu werden.

12. Tauscher nach dem vorhergehenden Anspruch, bei dem die komplementär ausgebildeten Kopplungsmittel mindestens einen Falz (R) und mindestens einen Fortsatz (A) umfassen, die so ausgestaltet und angeordnet sind, dass ein Teil (A1) des Fortsatzes (A) durch elastische Verformung in den Falz (R) einsetzt wird, wobei der Falz (R) in dem Filterträger (8) oder in dem Anschlussflansch (4) oder in dem Gasbehälter (5) begrenzt ist und der Fortsatz (A) in einem Bereich des strukturellen Elements (7) oder umgekehrt.

13. Tauscher nach dem vorhergehenden Anspruch, wenn rückbezogen auf Anspruch 9 oder 10, wobei sich der Ansatz (A) von einer (7a) der vier Seiten (7a, 7b, 7c, 7d) des Umfangsrahmens (7) erstreckt und diese überragt.

14. Tauscher nach einem der Ansprüche 3 bis 13, wobei der Partikelfilter (3) dazu ausgestaltet ist, den Durchtritt von Partikel, die größer als Rußpartikel sind, zu hemmen.

## Claims

1. Gas pipe unit assembly having a particle filter (3), for a heat exchanger for gas, very especially for engine exhaust gases, the gas pipe unit being able to be fixed to one end of a heat exchanger block such that it remains in fluidic communication with the latter in order for the gases to pass through it and the particle filter (3) being coupled to the gas pipe unit in order to filter the exhaust gases that pass through it, **characterized in that** said particle filter (3) is interchangeable, said filter being mounted in a removable manner in said gas pipe unit, said gas pipe unit comprising at least one flange (4) for connecting to a gas recirculation line, and said particle filter (3) being mounted in a removable manner on said connecting flange (4) and disposed so as to filter the gases that pass through it and pass through a through-opening (4a) in the connecting flange (4).

2. Assembly according to the preceding claim, wherein said gas pipe unit comprises a gas reservoir (5), a second particle filter (3) being mounted in a removable manner on said gas reservoir (5).

3. Heat exchanger for gas, in particular for engine exhaust gases, which comprises:
- a heat exchanger block intended for the circulation of the gases with exchange of heat with a heat transfer fluid;
- a gas pipe unit fixed to one end of said heat exchanger block such that it remains in fluidic communication with the latter in order for the gases to pass through it; and
- a particle filter (3) disposed between the gas inlet and the gas outlet of the heat exchanger such that the gases pass through it,
**characterized in that** the gas pipe unit and the particle filter are an assembly according to Claim 1 or 2.

4. Heat exchanger according to Claim 3, wherein said heat exchanger block comprises a housing which accommodates in its interior a bundle of tubes intended for the circulation of the gases with exchange of heat with said heat transfer fluid, which circulates inside the housing outside the tubes.

5. Heat exchanger according to Claim 3, wherein said heat exchanger block comprises a housing which accommodates in its interior a plurality of stacked plates, between which the gases and the heat transfer fluid circulate in two independent circuits, in alternating layers, delimited by said plates.

6. Heat exchanger according to any one of Claims 3 to 5, wherein said gas pipe unit also comprises a gas reservoir (5) having a first part (5a), which comprises a first opening (01), connected to one end of said heat exchanger block or of said housing, and a second part (5b), which comprises a second opening (O2), connected to said connecting flange (4).

7. Heat exchanger according to any one of Claims 3 to 6, comprising at least one seal for mounting said particle filter (3) in a sealed manner with respect to the gases in the gas pipe unit or in the gas reservoir.

8. Heat exchanger according to the preceding claim when it is dependent on Claim 6, wherein said particle filter (3) comprises a filtration element (6) and, joined to the latter, a structural element (7) fixed in a removable manner to a filter support (8) defined in or fixed to said connecting flange (4).

9. Heat exchanger according to the preceding claim, wherein said structural element (7) is a peripheral frame joined to the contour of the filtration element (6) and said filter support (8) comprises at least one non-through slot (8a) into which at least a part of said peripheral frame (7) fits in a guided manner.

10. Heat exchanger according to the preceding claim, wherein said seal is a peripheral seal (9) which is coupled to the contour of said peripheral frame (7) and at least a part of which is compressed between the peripheral frame (7) and said at least one non-through slot (8a), preventing the outlet of gas.

11. Heat exchanger according to any one of Claims 8 to 10, wherein said structural element (7) and said filter support (8), or said connecting flange (4) or said gas reservoir (5) respectively comprise complementary coupling means that are able to be coupled in a releasable manner for mounting the particle filter (3) in a removable manner with respect to the filter support (8), or to the connecting flange or to the gas reservoir.

12. Heat exchanger according to the preceding claim, wherein said complementary coupling means comprise at least one rebate (R) and at least one extension (A) that are configured and disposed such that a part (A1) of the extension (A) fits, by elastic deformation, in said rebate (R), the rebate (R) being delimited in the filter support (8), or in the connecting flange (4) or in the gas reservoir (5), and the extension (A) in a region of the structural element (7), or vice versa.

13. Heat exchanger according to the preceding claim when it is dependent on Claim 9 or 10, wherein said extension (A) extends and protrudes beyond one (7a) of the four sides (7a, 7b, 7c, 7d) of said peripheral frame (7).

14. Heat exchanger according to any one of Claims 3 to 13, wherein the particle filter (3) is configured to block the passage of particles with a size greater than that of soot particles.
